# EUROPEAN PATENT SPECIFICATION

(11) **EP 4 789 889 B1**
(45) Date of publication and mention of the grant of the patent: **11.11.2026**
(21) Application number: 25157628.6
(22) Date of filing: 13.02.2025
(51) Int. Cl.: B60K 7/00, B62D 59/04

(54) **MANEUVERING DRIVE SYSTEM AND VEHICLE**
MANÖVRIERENDES ANTRIEBSSYSTEM UND FAHRZEUG
SYSTÈME D'ENTRAÎNEMENT DE MANUVRE ET VÉHICULE

(30) Priority: 07.02.2025 CN 202510142504
(43) Date of publication of application: 12.08.2026
(73) Proprietor: Carman Enterprise Co., Ltd, Hangzhou 311121 (CN)
(72) Inventor: Li, Shuoyang, Hangzhou, 311121 (CN)
(74) Representative: Paul & Albrecht Patentanwälte PartG mbB

(56) References cited:
- EP-A1- 2 824 019
- EP-A1- 4 403 404
- EP-A2- 2 455 276
- CN-A- 117 246 115

## Description

The present invention relates to a maneuvering drive system for a vehicle, in particular for a vehicle without its own drive, preferably for a trailer, comprising at least one, in particular at least two, preferably exactly two drive units, which are designed to be attached to a vehicle in order to drive a wheel of the vehicle, each drive unit comprising a carrier body, a drive element, which is held rotatably about a rotation axis at the carrier body and which is designed and arranged such that it can be brought into a abutment with a wheel of the vehicle to drive the vehicle, an electrical drive motor, which is mounted to the carrier body and which defines a motor axis, and transmission means, which are designed and arranged such that a rotary movement of the motor shaft of the electrical drive motor is converted into a rotary movement of the drive element.

Furthermore, the present invention relates to a vehicle, in particular a vehicle without its own drive.

Vehicles without their own drive may, for example, be trailers such as caravans, boat trailers, horse trailers or the like. In case of such vehicles, it is considered problematic that they can only be moved with difficulty by hand when they are not connected to the towing vehicle, for example a passenger car. In the case of a caravan trailer, for example, which has been disconnected from the car, by which it was transported to a suitable point on a camp site, maneuvering by hand to the final parking position is very difficult.

In order to facilitate maneuvering in the disconnected state, maneuvering drive systems have been developed which can be mounted on a vehicle without its own drive. Such a maneuvering drive system usually comprises at least two drive units by means of which the wheels of the vehicle to be moved can be set in rotation. The drive units are mounted on the outside of a vehicle, usually in an area immediately in front of or behind the wheels, which are to be driven by the drive units. The drive units each comprise on a front side a rotatable drive element, for example a friction wheel, which is brought into frictional connect with a wheel of the vehicle, so that rotation of the drive element causes rotation of the wheel of the vehicle. Each drive element is assigned an electrical drive motor, which is coupled to the drive element and is able to set the drive element in rotation.

Usually, a high rotation speed of the drive motor must be converted into a comparatively low rotation speed of the drive element. For this purpose, solutions exist with a so-called "direct gear", which means that a spur gearing having a plurality of gear wheels being an engagement with each other is provided. Even if such a system has been proven itself in principle, it is sometimes considered as disadvantageous, that no self-locking mechanism is provided. Accordingly, it is necessary to provide an electronic brake, which is able to stop the mover/the vehicle in particular when the vehicle is positioned on a sloping ground. Furthermore, such a spur gearing having high rotation speeds often produces a significant amount of noise.

Maneuvering drive systems, which are designed as mentioned at the beginning, are disclosed in EP 2 455 276 A2 and EP 2 824 019 A1.

Based in this prior art, it is an object of the present invention to provide an alternative maneuvering drive system, which in particular avoids the above-mentioned disadvantages.

This object is solved in a maneuvering drive system mentioned at the beginning in that the transmission means comprise a worm gear and a planetary gear.

The invention is based on the consideration not to provide direct gearing comprising a plurality of gear wheels in engagement with each other, but practically two stages, namely one worm gear and one planetary gear. In other words, the high rotation speed of the drive motor is converted in two steps into a comparatively low rotation speed, but high momentum of the drive element. In this way, a high transmission ratio can be achieved. In addition, the combination of a worm gear and a planetary gear allow a space- and weight- saving design as the transmission ratio is distributed over two different gears.

According to a preferred embodiment, the worm gear and the planetary gear are arranged technically one after the other. This means that in a first step a worm gear significantly reduces the speed of rotation compared to the speed of rotation of the motor shaft of the electrical drive motor. In a second step, a planetary gear further reduces the speed of rotation, so that in total the desired transmission ratio can be achieved.

Preferably, the worm gear comprises a worm screw, which is connected to the motor shaft in a rotationally fixed manner or is formed a single-piece design with the motor shaft. The worm gear may further comprise a worm wheel, which is engagement with the worm screw and is mounted to an intermediate shaft, which is held rotatably about an intermediate shaft axis at the carrier body. In other words, the motor shaft drives the worm screw, which is in engagement with the worm wheel. In this way, a relatively fast rotation of the motor shaft is converted to a slower rotation of the intermediate shaft. An important advantage of a worm gear is that it has a self-locking effect. Accordingly, it is possible, that the worm screw drives the worm wheel, but it is excluded that the worm wheel can drive the worm screw. Contrary to classical spur gears, an electromagnetic brake need not to be provided in a worm gear. Furthermore, the noise level is reduced.

In concrete terms, the intermediate shaft axis can extend parallel to the rotation axis of the drive element. The motor axis can extend transversally, in particular perpendicularly, to the rotation axis of the drive element. The motor axis can be arranged offset from the intermediate shaft axis.

According to a preferred embodiment, the worm gear may comprise exactly one gear stage. It has been proven that a worm gear with one gear stage is sufficient to achieve the desired transmission ratio.

The planetary gear may comprise at least one gear stage, in particular exactly one gear stage. Each gear stage may comprise a sun gear, a plurality of planetary wheel, which are held rotatably at a planetary wheel carrier, and a hollow gear, wherein the planetary wheels are in engagement with the sun gear and the hollow gear of the respective gear stage. Such a planetary gear allows to achieve a high transmission ration. In other words, relatively high rotation speed of the intermediate shaft can be converted in a comparatively low speed, but high momentum of an output shaft of the planetary gear.

In concrete terms, the intermediate shaft can be connected or formed in a single-piece design with the sun gear. More precisely, the worm wheel may be arranged at one end of the intermediate shaft. The sun gear of the planetary gear may be arranged at the other end of the intermediate shaft.

The hollow gear may be fixedly connected to the carrier body. In other words, the hollow gear does not rotate and can be fixed to the carrier body, for example by means of screws extending axially into a hollow gear.

The planetary carrier may be connected to or formed in a single-piece design with an output shaft. This output shaft can be coupled with a drive element in such a way that a rotary movement of the output shaft is converted into a rotary movement of the drive element.

The transmission means may comprise a gearing arrangement, by means of which a rotary movement of the output shaft is translated/converted into a rotary movement of the drive element. This embodiment is based on the consideration that normally the axis of the output shaft and the rotation axis of the drive element may extend parallel to each other, but are spaced apart from each other. This offset can be bridged by a gearing arrangement.

In concrete terms, the gearing arrangement may comprise a spur gearing having a plurality of gear wheels in engagement with each other. In concrete terms, the spur gearing may comprise three wheels, wherein one gear wheel is connected to the output shaft in a rotationally fixed manner and another gear wheel is connected in a rotationally fixed manner to the drive element. The spur gearing may further comprise an intermediate gear wheel, which is in engagement with the other gear wheels. The gear wheels of the spur gearing may be beared at one common base element, which may be a part of the carrier body.

The gearing arrangement may comprise a traction drive, in particular a geared belt drive or a chain drive. Accordingly, the distance between the rotation axis of the drive element and the axis of the output shaft may be over-bridged by means of such a traction drive.

Preferably, each drive motor may be brushless motor. Brushless motors are characterized by a high power-to-weight ratio and low maintenance efforts. Normally, motors equipped with brushes have the tendencies to break as the brushes are subjected to wearing. Furthermore, a brushless motor does not need a tolerance gap between the power brushes, so it has per se a higher power efficiency. Due to the fact that no slipperings or commutators and no brushes are necessary, a brushless motor has less friction. Furthermore, at brushless motors, it is easier to monitor and control the speed of rotation, which makes it easier to move a vehicle without its own drive in a straight line. The size and weight of a brushless motor is also smaller compared to a motor equipped with brushes having the same power. In particular, the combination of a brushless motor with a higher voltage of more than 12 V is advantageous, as the electrical current is reduced. Generally, high electrical currents often cannot be tolerated by a brushless motor due to demagnetization effects. Accordingly, in particular the combination of providing a brushless motor at an increased voltage leads to a very space saving, highly efficient and long service life functioning.

The electrical drive motors may have an internal rotor. Accordingly, the motors may be formed such that the stationary part (stator) of the motor encloses the moving part (rotor).

According to a further elaboration of the invention, the drive motors may comprise a rotor information detection device, in particular hall-sensors, in order to gain information about the position and/or the movement of the rotor. Preferably, the rotor information detection device can be formed as or comprise at least one, in particular a plurality of hall-sensors, by means of which the position of the rotor can be determined exactly. The hall-sensors may be distributed over the circumference, in particular equally distributed.

According to an alternative embodiment of the invention, no sensor elements, such as hall-sensors, which are designed and arranged to directly to directly detect the current position of the rotors of the drive motors, are provided. In other words, the electrical drive motor may not have a rotor information detection device such as hall-sensors. A sensor element, which is designed and arranged to detect directly the positon of the rotor is understood to be a sensor that is located in direct proximity to the rotor and interacts directly with rotating parts of the rotor. In the prior art, very often hall-sensors are used, which detect a magnetic flux and thus the current position of the rotor. Another example for sensor, which can detect directly the position of the rotor, are optical sensors, which detect the position of the rotor via an optical signal. The detailed embodiment of such drive motors without a rotor information detection device such as sensor elements is described in EP 4 403 404 A1.

Preferably, an infeed device is assigned to each drive unit. The infeed device can bring the drive unit into a frictional and driving contact between its drive element and the wheel of a vehicle to be driven in particular by a guided linear or pivoted movement. The infeed device may comprise an infeed motor by means of which the infeed movement can be carried out in a motorized manner. The infeed device may comprise a weather-resistant or water-tight infeed housing, which surrounds at least the infeed motor.

According to a preferred embodiment, the electrical drive motor of each drive unit can be designed to be operated at an operating voltage of more than 12 V in particular of more than 16 V, preferably of 24 V, 36 V or 48 V. In this way, it is possible to increase the output power of the motor and/or to design the drive units in a very space-saving way compared to a drive motor, which is operated at a conventional operating voltage of 12 V. In concrete terms, the power loss in cables is depended from the electrical current, the length of the cables and the specific resistance determined by the material of the cable. The power loss appear in all cables between a power source, a control device and the drive motor itself. As a higher electrical voltage leads to a reduced electrical current, the power losses are significantly reduced by a voltage of more than 12 V, so that, at the same input power, the output power of the drive motor is significantly increased.

It has been proven in particular advantageous if the electrical voltage used for operation of the drive motor is 36 V. On one hand, such a voltage is not dangerous for the human body when a person comes accidentally in contact with a non-isolated component. On the other hand, such a voltage leads to a significant reduction in power losses compared to a common voltage of 12 V. In particular, the combination of providing a brushless motor having an internal or external rotor at an increased voltage leads to a very space-saving, highly efficient and long service life functioning.

According to a preferred embodiment, each drive unit may comprise an internal battery, in particular a rechargeable battery, which is designed to supply an electrical supply voltage for operation of the drive motor of more than 12 V, in particular of more than 16 V, preferably of 24 V, 36 V or 48 V. This embodiment is based on the consideration to provide a so-called all-in-mover, which is preferably formed as an integral system and has an internal battery. In this way, it can be avoided that each drive unit must be connected by means of cables to a central power supply, for example to the battery of the vehicle to be moved. This is in particular advantageous if the maneuvering drive system is used in different vehicles and must be mounted and dismounted regularly.

Alternatively, each drive unit may comprise electrical connecting means in order to connect the drive unit to a central power supply. Such a central power supply need not be a part of the maneuvering drive system. It can be a battery of the vehicle to be driven. Accordingly, it may be provided that each drive unit can be connected to such a central power supply.

It is conceivable that each drive unit is or can be directly connected to a central power supply. Each drive unit may comprise transformation means, in particular in the form of an inverter, to transform a power supply voltage provided by central power supply to the operating voltage of the electrical drive motor. Such transformation means can be arranged such that they are able to transform a power supply voltage of 12 V, which is preferably provided by a central battery, to an operating voltage of more than 12 V, in particular of more than 16 V, preferably of 24 V, 36 V or 48 V. In this way, a classical standardbattery can be used for power supply.

The maneuvering drive system may further comprise a central power supply, in particular in the form of a battery, preferably a rechargeable battery, wherein the central power supply is connected to each drive unit. Preferably, the central power supply may be designed to supply an electrical supply voltage of 12 V. The system may further comprise central transformation means, in particular in the form of an inverter, which are arranged between the central power supply and the drive unit(s) in order to convert the electrical supply voltage provided by the central power supply to the operating voltage of the electrical drive motor(s). In other words, in this case, it is not provided that each drive unit has its own transformation means, but central transformation means are provided. The transformation means may comprise an inverter, which may be connected on one end to the central power supply and on the other end to each drive unit. By means of a central power supply, an internal battery in the drive units is not necessary. In this way, the drive units can be designed in weight- and space-saving design.

According to a preferred embodiment, each drive unit may comprise a control device in particular having a communication module. The control device can be fixed to or integrated into a drive unit. A control device is used to regulate the rotation of the drive motor. A communication module can be arranged such that it is able to communicate with a remote control unit connected by cable or by wireless connection.

The maneuvering drive system may be arranged such that one remote control unit is able to communicate with a plurality of drive units at the same time. In other words, each control device of the drive units may be able to communicate directly with the remote control unit. Accordingly, a direct communication path can be established between one remote control unit and the control devices of all, in particular both drive units. Such an arrangement leads to only a low delay during communication.

Alternatively, the control device of one drive unit may be formed as a master control device, which is able to communicate with a remote control, and the control device(s) of the other drive unit is/are formed as a slave control device(s) so that it is/ they are able to communicate with a master control device in order to get instructions from the latter. Accordingly, a communication signal from a remote control unit is at first transmitted to a master control device and from a master control device to a slave device/devices. This design may allow to use a Bluetooth connection between the remote control unit and the master control device.

The maneuvering drive system may comprise a remote control unit, which is able to communicate with on or with a plurality of control devices of the drive units.

According to an alternative embodiment, the maneuvering drive system may comprise one central control device, which is connected with each drive unit, in particular with the respective drive motor of each drive unit. The central control device may be used if a central power supply is provided. It may be arranged electrically between the transformation means and the drive units. In other words, the control device may be connected on one side with a central power supply or the central transformation means and on the other side with the drive unit(s).

The central control device may be able to communicate with a remote control unit as described above.

The object mentioned above is also solved by a vehicle, in particular a vehicle without its own drive, comprising a maneuvering drive system as described above.

Further features and advantages of the present invention will become clear by the following description of an embodiment of a maneuvering drive system according to the invention with reference to the enclosed drawing. In the drawing shows:
- Figure 1: a vehicle comprising a maneuvering drive system according to the invention in a perspective view;
- Figure 2: a drive unit of the maneuvering drive system in a perspective view;
- Figure 3: the drive unit of figure 2 in another perspective, partially cross-sectional view without a housing;

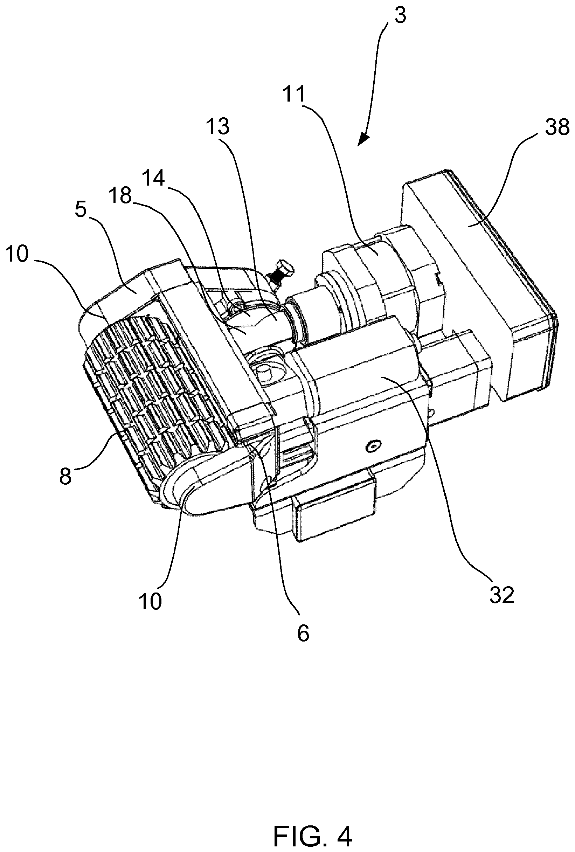

- Figure 4: the drive unit of figure 2 in another partial cross-sectional perspective view without housing;

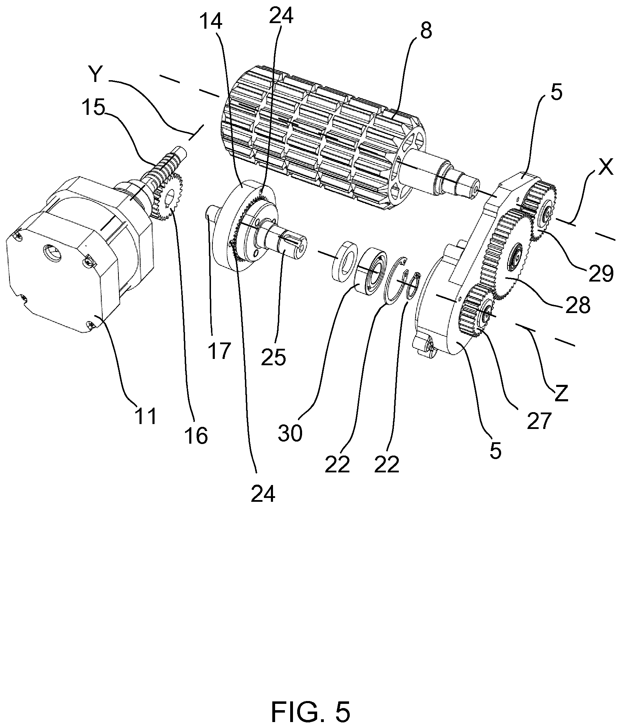

- Figure 5: the drive motor, the transmission means and the drive element of the drive unit of figure 2 in an exploded perspective view;

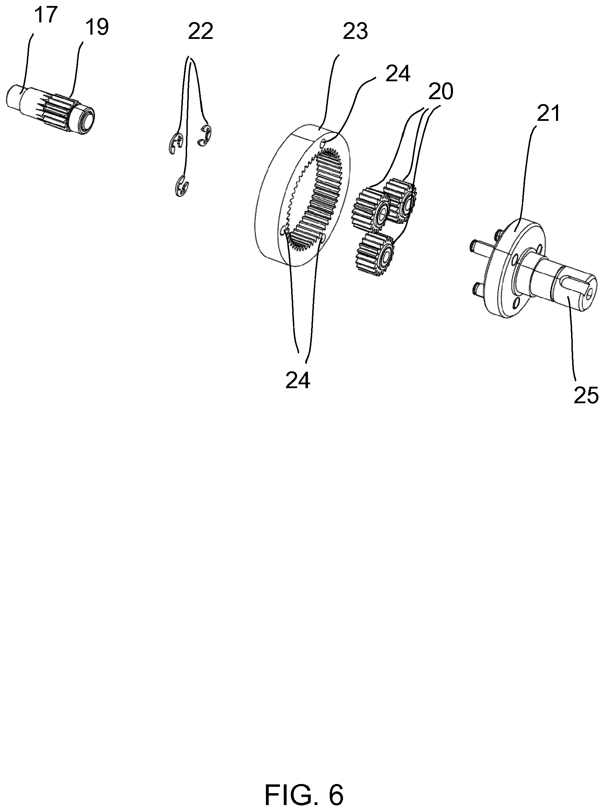

- Figure 6: the planetary gear of the drive unit of figure 2 in an exploded view;
- Figure 7: the drive unit of figure 2 and a part of the vehicle in the side view in a first configuration, when the drive element is not in contact with a wheel to be driven;
- Figure 8: the arrangement of figure 7 in another configuration, when the drive element is in contact with a wheel to be driven;
- Figure 9: a vehicle with a first embodiment of a maneuvering drive system according to the invention in a schematical view;
- Figure 10: a vehicle with a second embodiment of a maneuvering drive system according to the invention in a schematic view;
- Figure 11: a vehicle with a third embodiment of a maneuvering drive system according to the invention in a schematical view; and
- Figure 12: a remote control unit for a maneuvering drive system in a perspective view.

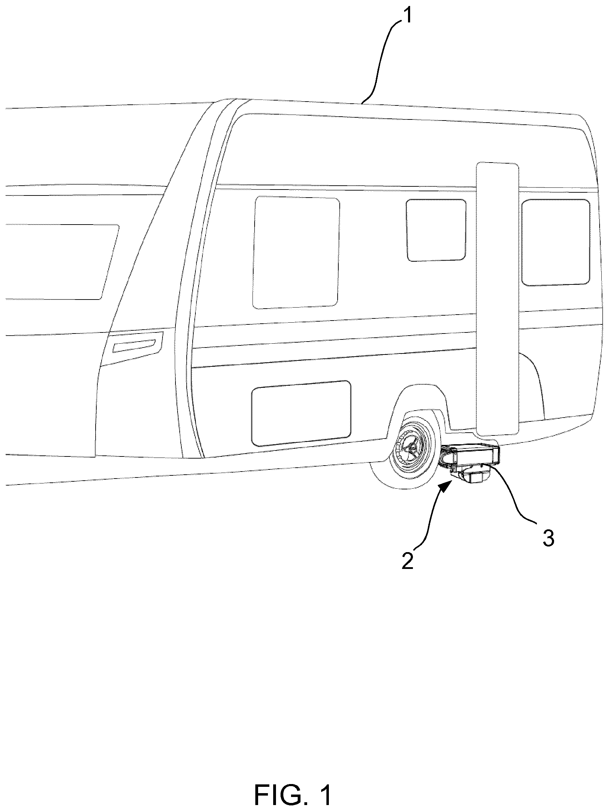

Figure 1 shows a vehicle, presently a caravan trailer 1, without its own drive. The caravan trailer 1 is a single-axle trailer so that it has in total two wheels. As it is visible on figure 1, the caravan-trailer 1 comprises a maneuvering drive system 2 according to the invention. The maneuvering drive system 2 comprises exactly two drive units 3, which are attached to the caravan-trailer 1 in order to drive a wheel of the trailer 1.

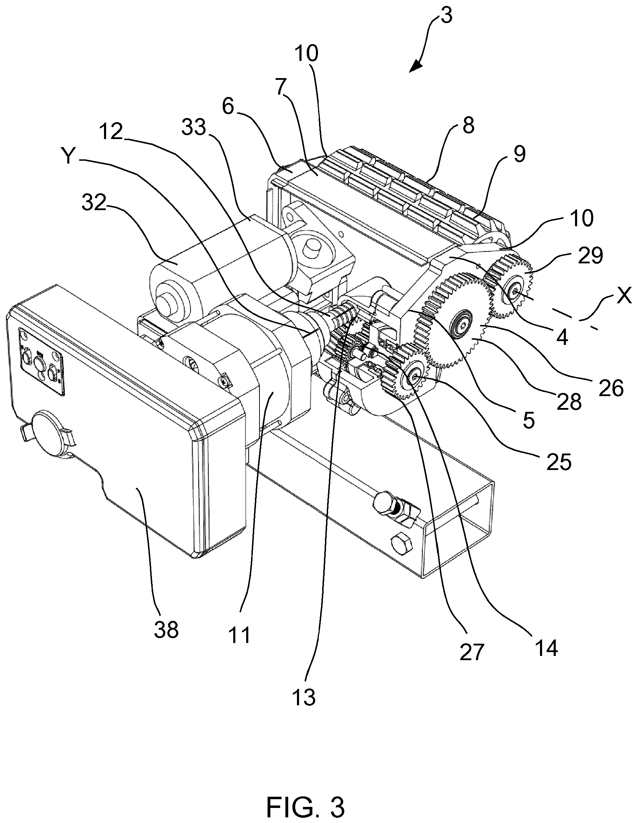

In concrete terms, each drive unit 3 comprises a carrier body 4, which can in particular be seen in figure 3. The carrier body 4 may comprise several components, for example a base element 5 and a base frame 6. Towards a front end, the base element 5 and the base frame 6 form a C-shaped section 7, which is arranged towards the wheel of the caravan trailer 1 when the drive unit 3 is mounted to the vehicle.

Each drive unit 3 further comprises a drive element 8 in the form of a roller. The drive element 8 has over its circumferential surface grooves 9 extending in the longitudinal direction of the drive element 8 in order to enhance the grip with a wheel of the vehicle when the drive element 8 is in contact therewith.

The drive element 8 is held rotatably about a rotation axis X at the carrier body 4, in concrete terms between the C-legs of the C-shaped section 7 formed by the base element 5 at one end and by the base frame 6 at the other end. Preferably, the outer circumferential surface of the drive element 8 protrudes from both C-legs 10.

Furthermore, each drive unit 3 comprises an electrical drive motor 11, which is a brushless motor. The drive motor 11 is mounted to the carrier body 4 and defines a motor axis Y. In concrete terms, the electrical drive motor 11 is mounted via several components to the base element 5. Preferably, the electrical drive motor 11 does not comprise an electric or electromagnetic brake.

Each drive unit 3 further comprises transmission means, which are designed and arranged such that a rotary movement of the motor shaft 12 of the electrical drive motor 11 is converted into a rotary movement of the drive element 8.

For this purpose, the transmission means comprise a worm gear 13 and a planetary gear 14. Accordingly, the high rotation speed and the low momentum of the motor shaft 12 of the electrical drive motor is converted in two steps into a low rotation speed and high momentum of the drive element 8.

The worm gear 13 is formed as a one stage worm gear and comprises a worm screw 15 which is formed in a single-piece design with the motor shaft 12. The worm gear 13 further comprises a worm wheel 16, which is in engagement with the worm screw 15. The worm wheel 16 is mounted to an intermediate shaft 17, defining an intermediate shaft axis Z, which extents perpendicularly to the motor axis Y and parallel to the rotation axis X of the drive element 8. The worm gear 13 is arranged inside a worm gear housing 18, which is fixed to the electrical drive motor 11.

The planetary gear 14 comprises exactly one gear stage. It has a sun gear 19, which is formed in a single-piece design with the intermediate shaft 17. The planetary gear 14 further comprises a plurality of planetary wheels 20, which are held rotatably at a planetary wheel carrier 21. Securing means are provided in order to avoid an unintended loosening of the planetary wheels 20 from the planetary wheel carrier 21, wherein the securing means are in particular formed as circlips 22.

The planetary gear 14 further comprises a hollow gear 23, which is fixedly connected to the carrier body 4 so that it cannot rotate about intermediate shaft axis Z. In concrete terms, the hollow gear 23 comprises a plurality of mounting holes 24, which extend in the longitudinal direction of the hollow gear 23 and by means of which the hollow gear 23 is screwed to the base element 5.

The planetary gear carrier 21 is formed in a single-piece design with an output shaft 25. The output shaft 25 is coupled with the drive element 8 in such a way that a rotary movement of the output shaft 25 is converted into a rotary movement of the drive element 8. The axis of the output shaft 25 is arranged coaxially to the intermediate shaft axis Z.

For this purpose, the transmission means comprise a gearing arrangement 26, which has a spur gearing having in total three gear wheels 27, 28, 29. The gear wheels 27, 28, 29 are in engagement with each other and are held rotatably at the base element 5 by means of roller bearings 30. In concrete terms, one gear wheel 27 is connected in a rotationally fixed manner to the output shaft 25, one gear wheel 29 is connected in a rotationally fixed manner to the drive element 8 and an intermediate gear wheel 28 is in engagement with both other gear wheels 27, 29.

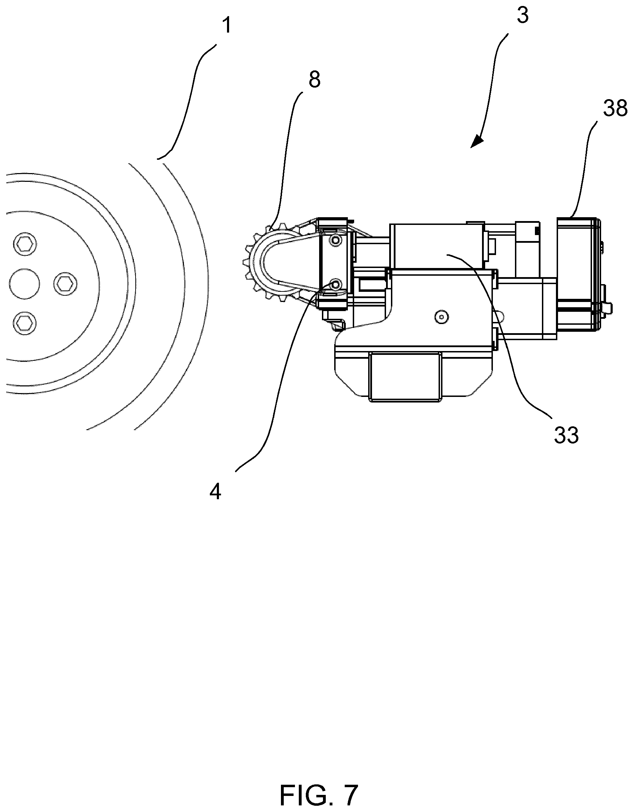

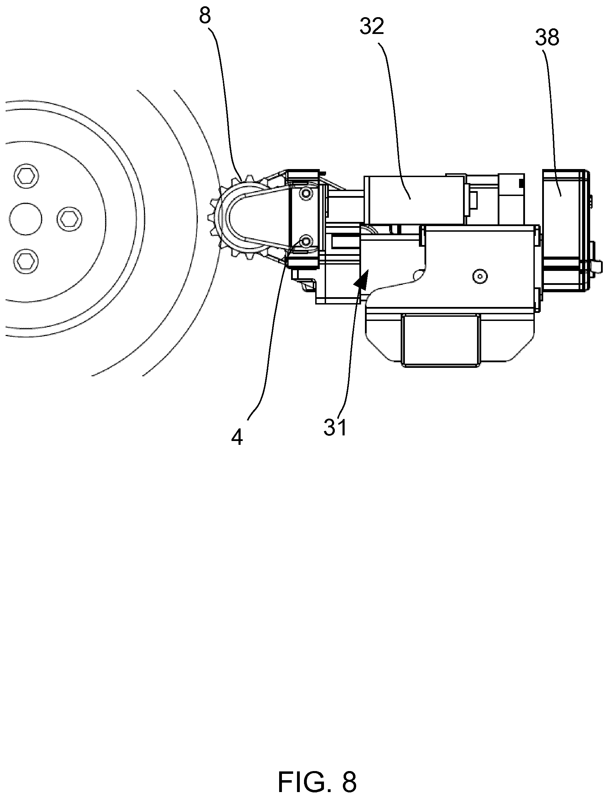

As it is visible for example in figure 7 and 8, an infeed device 31 is assigned to each drive unit 3. The infeed device 31 can bring the drive unit 3 into a frictional and driving contact between its drive element 7 and the wheel of a vehicle to be driven, presently a guided linear movement.

For this purpose, the infeed device 31 comprises an infeed motor 32, which can be seen schematically in figure 8 and which is able to bring the drive element 8 from a position shown in figure 7, wherein the drive element 8 is not in contact with the wheel of a vehicle to be driven, into contact with this wheel shown in figure 8.

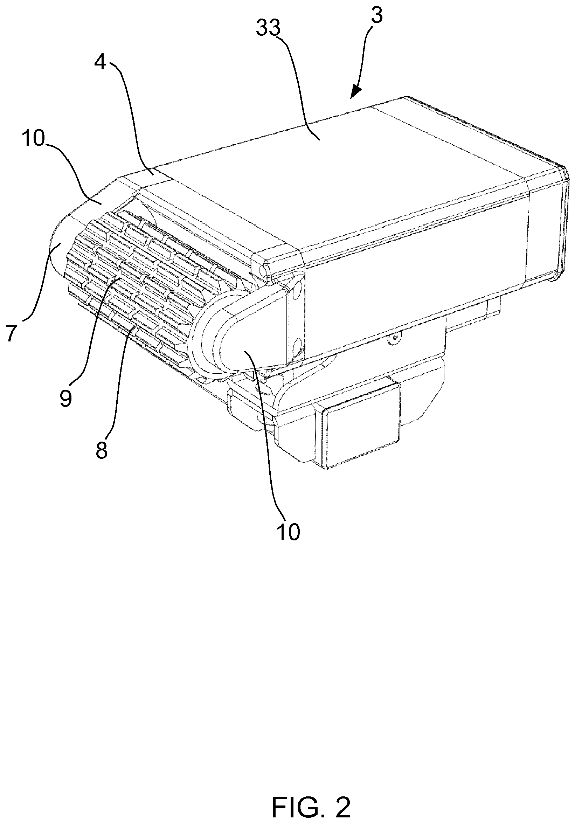

The drive unit 3 further comprises a housing 33, which surrounds the gearing arrangement 26 for protection against dust and dirt. As it is visible for example figure 2, the housing 33 is or can be mounted to the carrier body 4.

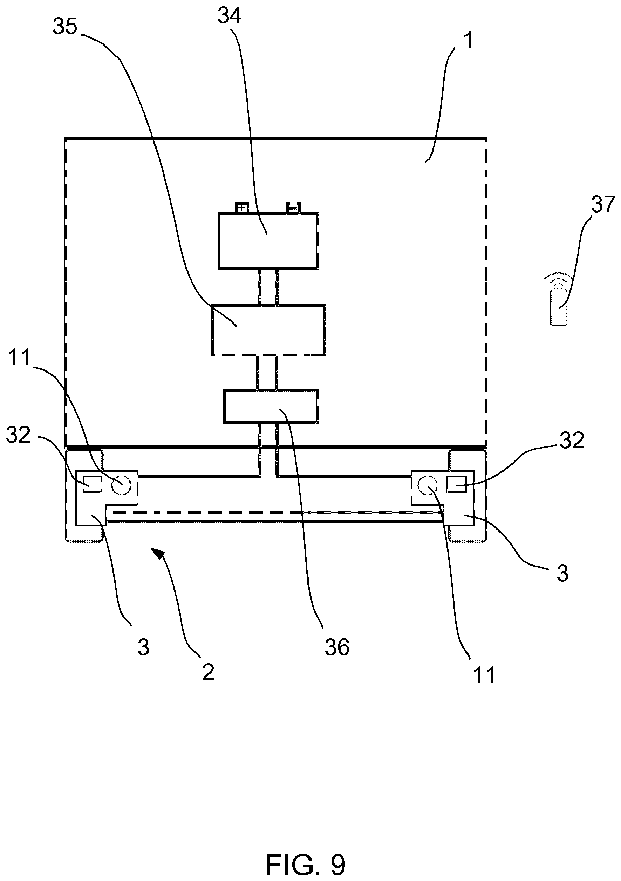

Figures 9 to 11 show different embodiments of maneuvering drive systems 2 according to the invention.

The system shown in figure 9 comprises a central power supply 34, which can be the battery of the caravan trailer 1. The central power supply 34 is presently designed to provide an electrical supply voltage of 12 V.

The maneuvering drive system 2 shown in figure 9 further comprises transformation means in the form of an inverter 35, which is able to transform the power supply voltage of 12 V provided by the central power supply 34 to the operating voltage of 36 V of the electrical drive motor 11.

Furthermore, the maneuvering drive system 2 comprises a central control device 36, which is electrically connected to each drive unit 3. Furthermore, the maneuvering drive system is arranged such that one remote control unit 37 shown schematically in figure 9 is able to communicate with a central control device 36 in order to control the movement of the motor shaft 12 of the electrical drive motor 11 and, consequently, the movement of the drive elements 8 of the drive units 3.

In this way, a standard central power supply 34 providing a supply voltage of 12 V can be used, wherein the electrical drive motors 11 are operated at 36 V, which reduces the power losses in cable and increase the power density of the drive motors 11.

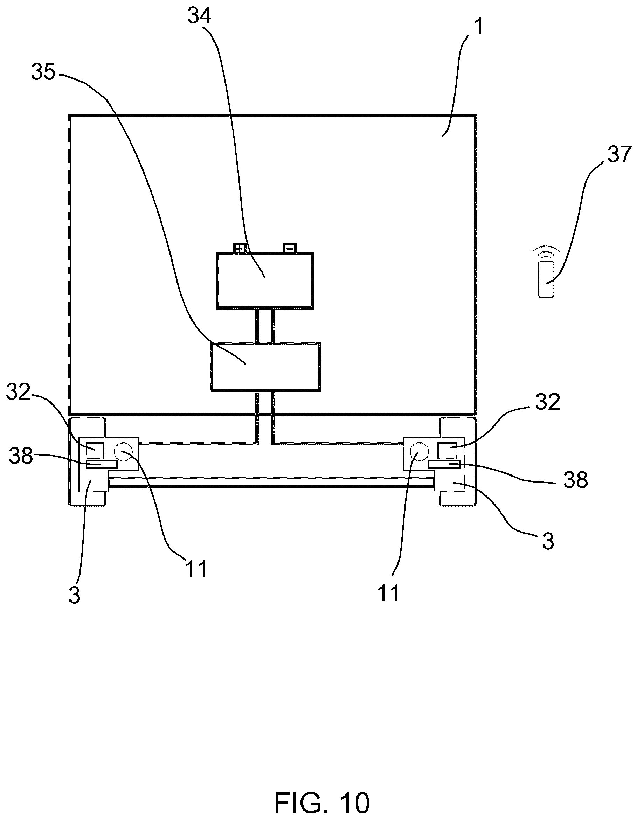

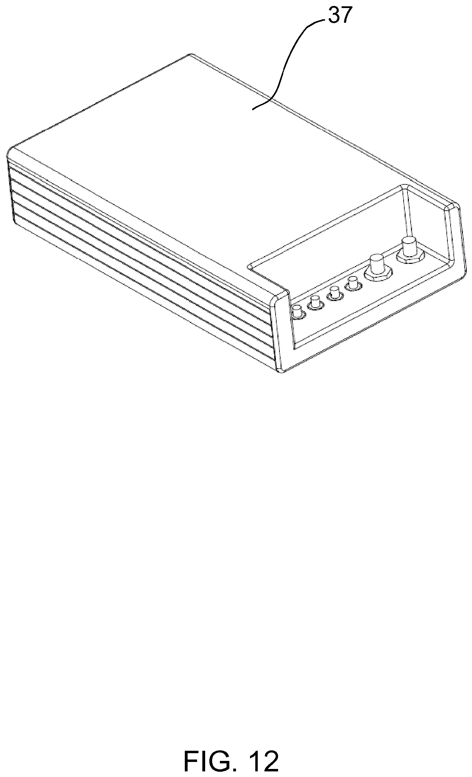

Figure 10 shows an alternative embodiment of the maneuvering drive system. As in the embodiment of figure 9, a central power supply 34 and an inverter 35 are provided. However, the central control device is not provided, but each drive unit 3 has its own control device 38. The maneuvering drive system is arranged such that one remote control unit 37 is able to communicate with both drive units 3 at the same time. An example for such remote control 37 can be seen in figure 12. Accordingly, a direct communication path can be established between one remote control unit 37 and the control devices 38 of both drive units 3.

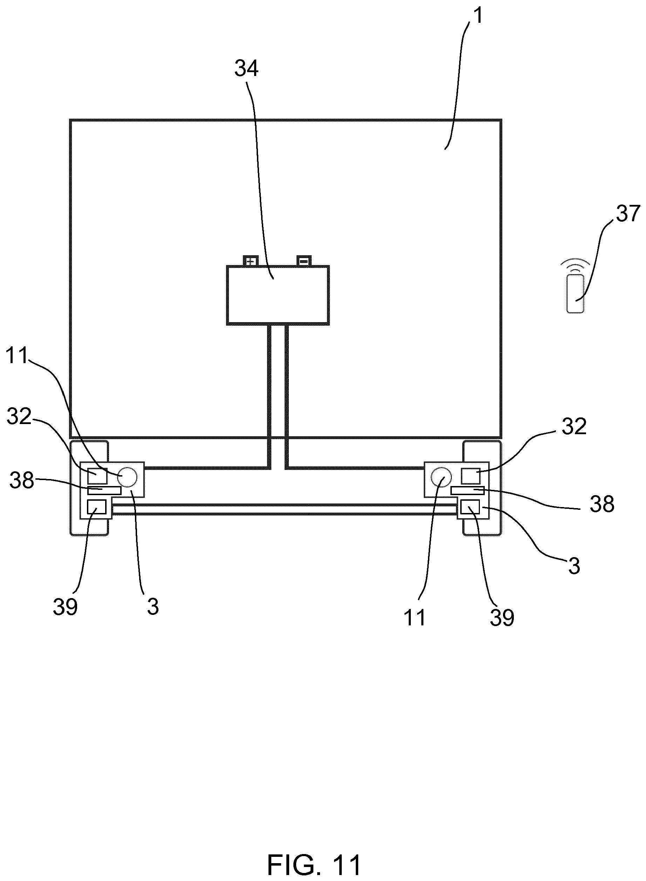

Figure 11 shows a further alternative embodiment. It has a central power supply 34, which is able to supply a power supply voltage of 12 V. Each drive unit 3 comprises transformation means in particular in the form of an inverter 39, to transform the power supply voltage of 12 V to the operating voltage of 36 V of the electrical drive motor. Furthermore, each drive unit comprises a control device 38 as describes in context with the embodiment of figure 10.

Independent from which embodiment is chosen, due to the combination of a worm gear and a planetary gear, a weight-and space-saving design can be achieved and a specific brake of the drive motor 11 is not necessary as the worm gear has a self-locking effect. Accordingly, it can be avoided safely that the vehicle 1 moves unintentionally when it is arranged on an oblique underground.

### Reference Character List

- 1: caravan trailer
- 2: maneuvering drive system
- 3: drive unit
- 4: carrier body
- 5: base element
- 6: base frame
- 7: C-shaped section
- 8: drive element
- 9: groove
- 10: C-leg
- 11: electrical drive motor
- 12: motor shaft
- 13: worm gear
- 14: planetary gear
- 15: worm screw
- 16: worm wheel
- 17: intermediate shaft
- 18: worm gear housing
- 19: sun gear
- 20: planetary wheels
- 21: planetary wheel carrier
- 22: circlip
- 23: hollow gear
- 24: mounting hole
- 25: output shaft
- 26: gearing arrangement
- 27: gear wheel
- 28: gear wheel
- 29: gear wheel
- 30: roller bearing
- 31: infeed device
- 32: infeed motor
- 33: housing
- 34: central power supply
- 35: inverter
- 36: central control device
- 37: remote control unit
- 38: control device
- 39: inverter
- X: rotation axis
- Y: motor axis
- Z: intermediate shaft axis

## Claims

1. Maneuvering drive system (2) for a vehicle, in particular for a vehicle without its own drive, preferably for a trailer, comprising at least one, in particular at least two, preferably exactly two drive units (3), which are designed to be attached to a vehicle in order to drive a wheel of the vehicle, each drive unit (3) comprising:
- a carrier body (4),
- a drive element (8), which is held rotatably about a rotation axis (X) at the carrier body (4) and which is designed and arranged such that it can be brought into abutment with a wheel of the vehicle to drive the vehicle,
- an electrical drive motor (11), which is mounted to the carrier body (4) and which defines a motor axis (Y),
- transmission means, which are designed and arranged such that a rotary movement of the motor shaft (12) of the electrical drive motor (11) is converted into a rotary movement of the drive element (8),
**characterized in that** the transmission means comprise a worm gear (13) and a planetary gear (14).

2. Maneuvering drive system (2) according to claim 1, **characterized in that** each gear stage of the worm gear (13) comprises a worm screw (15), which is connected to the motor shaft (12) in a rotationally fixed manner or is formed in a single-piece design with the motor shaft (12), and a worm wheel (16), which is in engagement with the worm screw (15) and is mounted to an intermediate shaft (17), which is held rotatably about an intermediate shaft axis (Z) at the carrier body (4).

3. Maneuvering drive system (2) according to claim 2, **characterized in that** the intermediate shaft axis (Z) extends parallel to the rotation axis (X) of the drive element (8), and/or **in that** the motor axis (Y) extends transversely, in particular perpendicularly, to the rotation axis (X) on the drive element (8).

4. Maneuvering drive system (2) according to any of the preceding claims, **characterized in that** the worm gear (13) comprises exactly one gear stage.

5. Maneuvering drive system (2) according to any of the preceding claims, **characterized in that** the planetary gear (14) comprises at least one gear stage, in particular exactly one gear stage, wherein each gear stage comprises a sun gear (19), a plurality of planetary wheels (20), which are held rotatably at a planetary wheel carrier (21), and a hollow gear (23), wherein the planetary wheels (20) are in engagement with the sun gear (19) and with the hollow gear (23) of the respective gear stage.

6. Maneuvering drive system (2) according to claim 5 and according to any of claims 2 to 4, **characterized in that** the intermediate shaft (17) is connected or formed in a single-piece design with the sun gear (19), and/or **in that** the hollow gear (23) is fixedly connected to the carrier body (4), and/or **in that** the planetary wheel carrier (21) is connected to or formed in a single-piece design with an output shaft (25), which is coupled with the drive element (8) in such a way that a rotary movement of the output shaft (25) is converted into a rotary movement of the drive element (8).

7. Maneuvering drive system (2) according to any of the preceding claims, **characterized in that** the transmission means comprise a gearing arrangement (26), by means of which a rotary movement of the output shaft (25) is translated into a rotary movement of the drive element (8), wherein, in particular, the gearing arrangement (26) comprise a spur gearing having a plurality of gear wheels (27, 28, 29) in engagement with each other, and/or wherein, in particular, the gearing arrangement (26) comprises a traction drive, in particular a geared belt drive or a chain drive.

8. Maneuvering drive system (2) according to any of the preceding claims, **characterized in that** each electrical drive motor (11) is a brushless motor, and/or **in that** each drive motor has an internal rotor, and/or **in that** the drive motors comprise a rotor information detection device, in particular hall-sensors, in order to gain information about the position and/or the movement of the rotor, and or **in that** the electrical drive motor (11) does not have a rotor information detection device such as hall sensors

9. Maneuvering drive system (2) according to any of the preceding claims, **characterized in that** an infeed device (31) is assigned to each drive unit (3), wherein the infeed device (31) can bring the drive unit (3) into a frictional and driving contact between its drive element (8) and the wheel of a vehicle to be driven, in particular by a guided linear or pivoting movement, wherein, in particular, the infeed device (31) comprises an infeed motor (32) by means of which the infeed movement can be carried out in a motorized manner, and/or wherein, in particular, the infeed device (31) comprises a weather-resistant and/or water tight infeed housing (33), which surrounds at least the infeed motor (32).

10. Maneuvering drive system (2) according to any of the preceding claims, **characterized in that** the electrical drive motor (11) is designed to be operated at an operating voltage of more than 12 V, in particular of more than 16 V, preferably at 24 V, 36 V or 48 V.

11. Maneuvering drive system (2) according to claim 10, **characterized in that** each drive unit (3) comprises electrical connecting means in order to connect the drive unit (3) to a central power supply (34), wherein, in particular, each drive unit (3) comprises transformation means, in particular in the form of an inverter (35), to transform a power supply voltage provided by a central power supply (34) to the operating voltage of the electrical drive motor (11).

12. Maneuvering drive system (2) according to any of the preceding claims, **characterized in that** the system further comprises a central power supply (34), in particular in the form of a battery, preferably a rechargeable battery, wherein the central power supply (34) is connected to each drive unit (3), wherein, preferably, the central power supply (34) is designed to supply an electrical supply voltage of 12 V.

13. Maneuvering drive system (2) according to claim 12, **characterized in that** the system further comprises central transformation means, in particular in the form of an inverter (35), which are arranged between the central power supply (34) and the drive unit(s) (3) in order to convert the electrical supply voltage provided by the central power supply (34) into the operating voltage of the electrical drive motor(s) (11).

14. Maneuvering drive system (2) according to any of the preceding claims, **characterized in that** each drive unit (3) comprises a control device (38), which in particular has a communication module, and/or **in that** the system comprises one central control device (36), which is connected with each drive unit (3), in particular with the respective drive motor (11) of each drive unit (3)

15. Vehicle, in particular a vehicle without its own drive, comprising a maneuvering drive system (2) according to any of the preceding claim.

## Patentansprüche

1. Manövrierantriebssystem (2) für ein Fahrzeug, insbesondere für ein Fahrzeug ohne eigenen Antrieb, vorzugsweise für einen Anhänger, mit mindestens einer, insbesondere mindestens zwei, vorzugsweise genau zwei Antriebseinheiten (3), die dazu ausgebildet sind, an einem Fahrzeug angebracht zu werden, um ein Rad des Fahrzeugs anzutreiben, wobei jede Antriebseinheit (3) umfasst:
- einen Trägerkörper (4),
- ein Antriebselement (8), das am Trägerkörper (4) um eine Drehachse (X) drehbar gelagert ist und so ausgebildet und angeordnet ist, dass es zum Antrieb des Fahrzeugs mit einem Rad des Fahrzeugs in Anlage gebracht werden kann,
- einen elektrischen Antriebsmotor (11), der am Trägerkörper (4) angebracht ist und eine Motorachse (Y) definiert,
- Übertragungsmittel, die so ausgebildet und angeordnet sind, dass eine Drehbewegung der Motorwelle (12) des elektrischen Antriebsmotors (11) in eine Drehbewegung des Antriebselements (8) umgesetzt wird,
**dadurch gekennzeichnet, dass** die Übertragungsmittel ein Schneckengetriebe (13) und ein Planetengetriebe (14) umfassen.

2. Manövrierantriebssystem (2) nach Anspruch 1, **dadurch gekennzeichnet, dass** jede Getriebestufe des Schneckengetriebes (13) eine Schneckenschraube (15) umfasst, die drehfest mit der Motorwelle (12) verbunden oder einstückig mit der Motorwelle (12) ausgebildet ist, sowie ein Schneckenrad (16), das mit der Schneckenschraube (15) in Eingriff steht und an einer Zwischenwelle (17) gelagert ist, die am Trägerkörper (4) um eine Zwischenwellenachse (Z) drehbar gehalten ist.

3. Manövrierantriebssystem (2) nach Anspruch 2, **dadurch gekennzeichnet, dass** sich die Zwischenwellenachse (Z) parallel zur Drehachse (X) des Antriebselements (8) erstreckt und/oder **dass** sich die Motorachse (Y) quer, insbesondere senkrecht, zur Drehachse (X) am Antriebselement (8) erstreckt.

4. Manövrierantriebssystem (2) nach einem der vorstehenden Ansprüche, **dadurch gekennzeichnet, dass** das Schneckengetriebe (13) genau eine Getriebestufe umfasst.

5. Manövrierantriebssystem (2) nach einem der vorstehenden Ansprüche, **dadurch gekennzeichnet, dass** das Planetengetriebe (14) mindestens eine Getriebestufe, insbesondere genau eine Getriebestufe, umfasst, wobei jede Getriebestufe ein Sonnenrad (19), mehrere Planetenräder (20), die an einem Planetenradträger (21) drehbar gehalten sind, und ein Hohlrad (23) umfasst, wobei die Planetenräder (20) mit dem Sonnenrad (19) und mit dem Hohlrad (23) der jeweiligen Getriebestufe in Eingriff stehen.

6. Manövrierantriebssystem (2) nach Anspruch 5 und nach einem der Ansprüche 2 bis 4, **dadurch gekennzeichnet, dass** die Zwischenwelle (17) mit dem Sonnenrad (19) verbunden oder einstückig mit diesem ausgebildet ist, und/oder **dass** das Hohlrad (23) fest mit dem Trägerkörper (4) verbunden ist, und/oder **dass** der Planetenradträger (21) mit einer Abtriebswelle (25) verbunden oder einstückig mit dieser ausgebildet ist, die mit dem Antriebselement (8) derart gekoppelt ist, dass eine Drehbewegung der Abtriebswelle (25) in eine Drehbewegung des Antriebselements (8) umgewandelt wird.

7. Manövrierantriebssystem (2) nach einem der vorstehenden Ansprüche, **dadurch gekennzeichnet, dass** die Übertragungsmittel eine Getriebeanordnung (26) umfassen, mittels derer eine Drehbewegung der Abtriebswelle (25) in eine Drehbewegung des Antriebselements (8) umgesetzt wird, wobei die Getriebeanordnung (26) insbesondere ein Stirnradgetriebe mit einer Vielzahl von Zahnrädern (27, 28, 29) umfasst, die miteinander in Eingriff stehen, und/oder wobei die Getriebeanordnung (26) insbesondere einen Traktionsantrieb, insbesondere einen Zahnriemenantrieb oder einen Kettenantrieb, umfasst.

8. Manövrierantriebssystem (2) nach einem der vorstehenden Ansprüche, **dadurch gekennzeichnet, dass** jeder elektrische Antriebsmotor (11) ein bürstenloser Motor ist, und/oder **dass** jeder Antriebsmotor einen Innenrotor aufweist, und/oder **dass** die Antriebsmotoren eine Rotorinformationserfassungsvorrichtung, insbesondere Hall-Sensoren, umfassen, um Informationen über die Position und/oder die Bewegung des Rotors zu gewinnen, und/oder **dass** der elektrische Antriebsmotor (11) keine Rotor-Informationserfassungsvorrichtung wie beispielsweise Hall-Sensoren aufweist

9. Manövrierantriebssystem (2) nach einem der vorstehenden Ansprüche, **dadurch gekennzeichnet, dass** jeder Antriebseinheit (3) eine Zustellvorrichtung (31) zugeordnet ist, wobei die Zustellvorrichtung (31) die Antriebseinheit (3) in einen Reib- und Antriebskontakt zwischen ihrem Antriebselement (8) und dem Rad eines anzutreibenden Fahrzeugs bringen kann, insbesondere durch eine geführte Linear- oder Schwenkbewegung, wobei insbesondere die Zustellvorrichtung (31) einen Zustellmotor (32) umfasst, mittels dessen die Zustellbewegung motorisch ausgeführt werden kann, und/oder wobei insbesondere die Zustellvorrichtung (31) ein witterungsbeständiges und/oder wasserdichtes Zustellgehäuse (33) umfasst, das zumindest den Zustellmotor (32) umgibt.

10. Antriebssystem (2) gemäß einem der vorstehenden Ansprüche, **dadurch gekennzeichnet, dass** der elektrische Antriebsmotor (11) für den Betrieb bei einer Betriebsspannung von mehr als 12 V, insbesondere von mehr als 16 V, vorzugsweise bei 24 V, 36 V oder 48 V ausgelegt ist.

11. Manövrierantriebssystem (2) nach Anspruch 10, **dadurch gekennzeichnet, dass** jede Antriebseinheit (3) elektrische Verbindungsmittel umfasst, um die Antriebseinheit (3) mit einer zentralen Stromversorgung (34) zu verbinden, wobei insbesondere jede Antriebseinheit (3) Umformmittel, insbesondere in Form eines Wechselrichters (35), um eine von einer zentralen Stromversorgung (34) bereitgestellte Versorgungsspannung in die Betriebsspannung des elektrischen Antriebsmotors (11) umzuwandeln.

12. Manövrierantriebssystem (2) nach einem der vorstehenden Ansprüche, **dadurch gekennzeichnet, dass** das System ferner eine zentrale Stromversorgung (34), insbesondere in Form einer Batterie, vorzugsweise einer wiederaufladbaren Batterie, umfasst, wobei die zentrale Stromversorgung (34) mit jeder Antriebseinheit (3) verbunden ist, wobei die zentrale Stromversorgung (34) vorzugsweise dafür ausgelegt ist, eine elektrische Versorgungsspannung von 12 V zu liefern.

13. Manövrierantriebssystem (2) nach Anspruch 12, **dadurch gekennzeichnet, dass** das System ferner zentrale Umwandlungsmittel, insbesondere in Form eines Wechselrichters (35), umfasst, die zwischen der zentralen Stromversorgung (34) und der/den Antriebseinheit(en) (3) angeordnet sind, um die von der zentralen Stromversorgung (34) bereitgestellte elektrische Versorgungsspannung in die Betriebsspannung des/der elektrischen Antriebsmotors/Motoren (11) umzuwandeln.

14. Manövrierantriebssystem (2) nach einem der vorstehenden Ansprüche, **dadurch gekennzeichnet, dass** jede Antriebseinheit (3) eine Steuervorrichtung (38) umfasst, die insbesondere ein Kommunikationsmodul aufweist, und/oder dass das Si eine zentrale Steuervorrichtung (36) umfasst, die mit jeder Antriebseinheit (3), insbesondere mit dem jeweiligen Antriebsmotor (11) jeder Antriebseinheit (3), verbunden ist

15. Fahrzeug, insbesondere ein Fahrzeug ohne eigenen Antrieb, mit einem Rangierantriebssystem (2) gemäß einem der vorstehenden Ansprüche.

## Revendications

1. Système d'entraînement de manœuvre (2) pour un véhicule, en particulier pour un véhicule dépourvu de propre entraînement, de préférence pour une remorque, comprenant au moins une, en particulier au moins deux, de préférence exactement deux unités d'entraînement (3), qui sont conçues pour être fixées à un véhicule afin d'entraîner une roue de celui-ci, chaque unité d'entraînement (3) comprenant :
- un corps de support (4),
- un élément d'entraînement (8), qui est monté de manière rotative autour d'un axe de rotation (X) sur le corps de support (4) et qui est conçu et agencé de telle sorte qu'il puisse être mis en butée contre une roue du véhicule pour entraîner ce dernier,
- un moteur d'entraînement électrique (11), qui est monté sur le corps de support (4) et qui définit un axe de moteur (Y),
- des moyens de transmission, qui sont conçus et agencés de telle sorte qu'un mouvement de rotation de l'arbre moteur (12) du moteur d'entraînement électrique (11) soit converti en un mouvement de rotation de l'élément d'entraînement (8),
**caractérisé en ce que** les moyens de transmission comprennent un engrenage à vis sans fin (13) et un engrenage planétaire (14).

2. Système d'entraînement de manœuvre (2) selon la revendication 1, **caractérisé en ce que** chaque étage de l'engrenage à vis sans fin (13) comprend une vis sans fin (15), qui est reliée à l'arbre moteur (12) de manière solidaire en rotation ou est formée d' e en une seule pièce avec l'arbre moteur (12), et une roue à vis sans fin (16), qui est en prise avec la vis sans fin (15) et est montée sur un arbre intermédiaire (17), lequel est maintenu de manière rotative autour d'un axe d'arbre intermédiaire (Z) sur le corps de support (4).

3. Système d'entraînement de manœuvre (2) selon la revendication 2, **caractérisé en ce que** l'axe d'arbre intermédiaire (Z) s'étend parallèlement à l'axe de rotation (X) de l'élément d'entraînement (8), et/ou **en ce que** l'axe du moteur (Y) s'étend transversalement, en particulier perpendiculairement, à l'axe de rotation (X) de l'élément d'entraînement (8).

4. Système d'entraînement de manœuvre (2) selon l'une quelconque des revendications précédentes, **caractérisé en ce que** l'engrenage à vis sans fin (13) comprend exactement un étage d'engrenage.

5. Système d'entraînement de manœuvre (2) selon l'une quelconque des revendications précédentes, **caractérisé en ce que** l'engrenage planétaire (14) comprend au moins un étage d'engrenage, en particulier exactement un étage d'engrenage, chaque étage d'engrenage comprenant une roue solaire (19), une pluralité de roues planétaires (20), qui sont montées de manière rotative sur un porte-roues planétaires (21), et une couronne creuse (23), les roues planétaires (20) étant en prise avec la roue solaire (19) et avec la couronne creuse (23) de l'étage d'engrenage respectif.

6. Système d'entraînement de manœuvre (2) selon la revendication 5 et selon l'une quelconque des revendications 2 à 4, **caractérisé en ce que** l'arbre intermédiaire (17) est relié à la roue solaire (19) ou formé d'un seul tenant avec celle-ci, et/ou **en ce que** la couronne creuse (23) est reliée de manière fixe au corps de support (4), et/ou **en ce que** le support de roues planétaires (21) est relié à un arbre de sortie (25) ou formé d'un seul tenant avec celui-ci, lequel est couplé à l'élément d'entraînement (8) de telle sorte qu'un mouvement de rotation de l'arbre de sortie (25) soit converti en un mouvement de rotation de l'élément d'entraînement (8).

7. Système d'entraînement de manœuvre (2) selon l'une quelconque des revendications précédentes, **caractérisé en ce que** les moyens de transmission comprennent un agencement d'engrenages (26), au moyen duquel un mouvement de rotation de l'arbre de sortie (25) est converti en un mouvement de rotation de l'élément d'entraînement (8), dans lequel, en particulier, l'agencement d'engrenages (26) comprend un engrenage droit comportant une pluralité de roues dentées (27, 28, 29) en prise les unes avec les autres, et/ou dans lequel, en particulier, le dispositif d'engrenage (26) comprend un entraînement par traction, en particulier un entraînement par courroie crantée ou un entraînement par chaîne.

8. Système d'entraînement de manœuvre (2) selon l'une quelconque des revendications précédentes, **caractérisé en ce que** chaque moteur d'entraînement électrique (11) est un moteur sans balais, et/ou **en ce que** chaque moteur d'entraînement comporte un rotor interne, et/ou **en ce que** les moteurs d'entraînement comprennent un dispositif de détection d'informations sur le rotor, en particulier des capteurs à effet Hall, afin d'obtenir des informations sur la position et/ou le mouvement du rotor, et/ou **en ce que** le moteur d'entraînement électrique (11) ne comporte pas de dispositif de détection d'informations sur le rotor tel que des capteurs à effet Hall

9. Système d'entraînement de manœuvre (2) selon l'une quelconque des revendications précédentes, **caractérisé en ce qu'**un dispositif d'engagement (31) est associé à chaque unité d'entraînement (3), le dispositif d'entraînement (31) pouvant mettre l'unité d'entraînement (3) en contact de friction et d'entraînement entre son élément d'entraînement (8) et la roue d'un véhicule à entraîner, notamment par un mouvement linéaire guidé ou pivotant, dans lequel, en particulier, le dispositif d'engagement (31) comprend un moteur d'engagement (32) au moyen duquel le mouvement d'engagement peut être effectué de manière motorisée, et/ou dans lequel, en particulier, le dispositif d'engagement (31) comprend un boîtier d'engagement (33) résistant aux intempéries et/ou étanche à l'eau, qui entoure au moins le moteur d'engagement (32).

10. Système d'entraînement de manœuvre (2) selon l'une quelconque des revendications précédentes, **caractérisé en ce que** le moteur d'entraînement électrique (11) est conçu pour fonctionner à une tension de service supérieure à 12 V, en particulier supérieure à 16 V, de préférence à 24 V, 36 V ou 48 V.

11. Système d'entraînement de manœuvre (2) selon la revendication 10, **caractérisé en ce que** chaque unité d'entraînement (3) comprend des moyens de connexion électrique afin de relier l'unité d'entraînement (3) à une alimentation électrique centrale (34), dans lequel, en particulier, chaque unité d'entraînement (3) comprend des moyens de transformation, notamment sous la forme d'un onduleur (35), pour transformer une tension d'alimentation fournie par une alimentation centrale (34) en tension de fonctionnement du moteur d'entraînement électrique (11).

12. Système d'entraînement de manœuvre (2) selon l'une quelconque des revendications précédentes, **caractérisé en ce que** le système comprend en outre une alimentation centrale (34), notamment sous la forme d'une batterie, de préférence d'une batterie rechargeable, l'alimentation centrale (34) étant reliée à chaque unité d'entraînement (3), l'alimentation centrale (34) étant de préférence conçue pour fournir une tension d'alimentation électrique de 12 V.

13. Système d'entraînement de manœuvre (2) selon la revendication 12, **caractérisé en ce que** le système comprend en outre des moyens de transformation centraux, notamment sous la forme d'un onduleur (35), qui sont disposés entre la source d'alimentation centrale (34) et la ou les unités d'entraînement (3) afin de convertir la tension d'alimentation électrique fournie par la source d'alimentation centrale (34) en tension de fonctionnement du ou des moteurs d'entraînement électriques (11).

14. Système d'entraînement de manœuvre (2) selon l'une quelconque des revendications précédentes, **caractérisé en ce que** chaque unité d'entraînement (3) comprend un dispositif de commande (38), qui comporte notamment un module de communication, et/ou **en ce que** le sys t comprend un dispositif de commande central (36), qui est relié à chaque unité d'entraînement (3), notamment au moteur d'entraînement respectif (11) de chaque unité d'entraînement (3)

15. Véhicule, en particulier un véhicule sans propulsion propre, comprenant un système d'entraînement de manœuvre (2) selon l'une quelconque des revendications précédentes.
